# EUROPEAN PATENT APPLICATION

(11) **EP 4 113 678 A1**
(43) Date of publication of application: **04.01.2023**
(21) Application number: 21382584.7
(22) Date of filing: 01.07.2021
(51) Int. Cl.: H01M 8/18

(54) **REDOX MICROFLUIDIC ENERGY STORAGE SYSTEM AND METHOD**

(71) Applicant: Micro Electrochemical Technologies S.L., 28935 Mostoles (Madrid) (ES)
(72) Inventor: Quintero Gamez, Alberto Emanuel, Móstoles (ES); Bernaldo de Quirós Sanz, Alberto, Móstoles (ES); Oraá Poblete, Beatriz, Móstoles (ES); De las Heras Fernandez, Miguel, Móstoles (ES)
(74) Representative: Balder IP Law, S.L.

(57) **Abstract**

The invention refers to a redox microfluidic energy storage system comprising a battery reactor, an electrolyte tank storing a positive liquid electrolyte, another electrolyte tank storing a negative electrolyte, a battery management system and a flow circulation system. The battery reactor comprises a plurality of membraneless battery microcells connected to each other. The flow circulation system supplies the electrolytes at particular flow rates to the battery reactor such that they are under a laminar flow regime creating an interphase therebetween for transferring ion charge carriers between them. The battery management system causes the flow circulation system to supply the electrolytes to the battery reactor and simultaneously supply an electrical current through the electrodes of the battery reactor to electrically charge the system or to supply the electrolytes to the battery reactor releasing an electrical current through the electrodes to electrically discharge the system.

## Description

### TECHNICAL FIELD

The present invention belongs to the field of energy storage and management. More specifically, the present invention refers to a redox microfluidic energy storage system and methods that use a redox flow battery formed by a plurality of membraneless battery microcells connected to each other. The electrolytes containing the active species are able to travel or pass through the battery microcells under a laminar flow regime avoiding the need of using selective ion exchange membranes or any other type of physical separator or barrier between the electrolytes. Additionally, all the components of the redox microfluidic energy storage system, with the exception of the electrolyte storage tanks, are designed and manufactured on microscale and may be mounted on or integrated into a single microchip.

### STATE OF THE ART

Energy storage is the capture of energy produced at one time for using it at a later time to reduce imbalances between energy demand and energy production. A device that stores energy is generally called an accumulator or battery. Energy comes in multiple forms including radiation, chemical, gravitational potential, electrical potential, electricity, elevated temperature, latent heat and kinetics. Energy storage involves converting energy from forms that are difficult to store to more conveniently or economically storable forms. These days, the importance of energy storage lies in three main factors: shift reduction in energy demand curve, Smart Grids development, and integration of renewable energy sources, which due to their characteristic intermittency, makes the development and improvement of energy storage systems even more urgent. Some of the methods and systems for storing energy which have been more recently developed are the electrochemical batteries (e.g., lithium-ion, lead-acid or sodium-sulfur batteries) and redox flow batteries, among others.

Flow batteries are a type of reversible storage system or device capable of storing energy through an electrochemical process. All electrochemical energy storage systems convert electrical energy into chemical energy when charging, and the process is reversed when discharging. In conventional electrochemical batteries energy conversion and storage take place at the same time in the battery reaction cells. However, in flow batteries the energy conversion is separated from the storage of energy. Therefore, flow batteries differ from conventional electrochemical batteries in that energy and power can be decoupled and scaled separately. In such flow batteries, power is determined by the battery cell size and/or the number of cells stacked in a stack, while the amount of stored energy (i.e., battery autonomy) is determined by the amount of energy storage medium/material. Flow batteries generally consist of two tanks, two pumping systems with integrated flow control, and a reactor, and they operate by pumping different chemical substances stored in tanks to the reactor where the chemical reactions that will generate electricity take place. Flow batteries require the energy storage material to be in liquid state.

Redox flow batteries are a type of flow batteries in which redox reactions take place over the electrodes disposed inside the reactor.

Fluid behavior at the microscale differs substantially from fluid behavior at the macroscale. An important effect of the microscale behavior of fluids is that the surface-to-volume ratio is very high, thereby improving fuel utilization and resulting in more compact reactors. In particular, at the microscale surface tension and viscosity of the fluid are the dominant forces and Reynolds value (ratio of inertial forces to viscous forces within a fluid which is subjected to relative internal movement due to different fluid velocities) of fluids is usually less than 100, which implies an homogenous advance of the fluid in a specific flow direction within the channel and in absence of turbulences. Therefore, at the microscale the fluid flow is always laminar and only molecular diffusion intervenes in the mixing of fluids.

Therefore, working with fluids at the microscale implies shorter residence times for charge carriers exchange within the fluid, which in turn implies a higher energy transfer rate. Another key aspect of working with fluids at the microscale is the ability to dispose of a physical barrier, e.g., a membrane or similar, separating the electrolytes which allows a significant reduction in the internal electrical resistance of the battery cell, an improvement in cell efficiency and performance, design simplification, as well as, a reduction in costs.

Known membraneless redox flow cells are generally based on the colaminar nature of microscale flows without the need for a physical barrier between them. Despite preventing chaotic flow, these devices still introduce a significant amount of advective mixing due to electrolyte viscosity differences that displace the interphase and the lack of a proper management system to compensate it. Thus, current micro flow cells keep the electrolytic reactants just partially separated, not being possible to operate as a flow battery with multiple charge/discharge cycles. Inter-diffusion is restricted to a diffusive mixing layer between electrolytes. The diffusive mixing layer can be controlled by selecting an appropriate reaction cell design and an appropriate flow rate of the fluid through the cell. However, the lack of separator element between electrolytes, together with the faster diffusion of the species, could lead to an increased crossover effect or mixing between the reactive species, and their consequent loss of capacity due to self-discharge processes. Besides, most of the developments of this technology exist only at the experimental level, as simple cell prototypes, without being integrated into a full operational design. A proper design and integration of each of the elements of the redox flow batteries is a crucial factor for its adequate operation. Nowadays, solutions able to successfully solve the aforementioned problems are not known.

Microfluidics and advances in microelectromechanical systems (MEMS) technologies have allowed the development and manufacture of devices such as micropumps and micro-valves, among others, which provide a very tight control over flow at the microscale. These devices offer other advantages, such as reduced size and weight, good portability, low power consumption, a wide flow range, low cost, the possibility of integration with other microfluidic devices, low leakage, fast response and linear operation. In parallel, micro manufacturing techniques have also been applied to the microfluidics sector.

Although many efforts have been made in the field of redox flow battery development, there is still a need in the state of the art for storage systems that are able to integrate membraneless redox flow batteries within microfluidic systems for improving the control over the electrolytes that flow within the reactors in order to optimize charging/discharging performance of such systems and to extend their operational life.

### DESCRIPTION OF THE INVENTION

A first object of the invention is a redox microfluidic energy storage system that comprises a battery reactor, a positive electrolyte tank storing a positive liquid electrolyte, a negative electrolyte tank storing a negative liquid electrolyte, a battery management system and a flow circulation system. The battery reactor comprises a plurality of membraneless battery microcells connected to each other. Preferably, said membraneless battery microcells are fluidly connected in parallel while they may be electrically connected in parallel or in series. As used herein, a membraneless battery microcell is a battery cell at the microscale which operates without a membrane or any other type of physical barrier or separator between the electrolytes that flow through the respective microcells. Said membraneless battery microcell relies on the nature of the microscale flows to maintain electrolyte streams in contact but separated with no mix between them.

Each battery microcell comprises a positive electrode half-microcell housing a positive electrode and a negative electrode half-microcell housing a negative electrode, the positive electrode half-microcell and the negative electrode half-microcell being fluidly connected and located opposite to each other. By having said half-microcells being located opposite to each other, the resistance to ion charge carrier diffusion from one electrolyte to the other is minimized. Preferably, the plurality of battery microcells will form a stack of microcells, although other layouts may be also possible.

The flow circulation system comprises a first micro pumping system configured to supply the positive liquid electrolyte from the positive electrolyte tank to the positive electrode half-microcells and a second micro pumping system configured to supply the negative liquid electrolyte from the negative electrolyte tank to the negative electrode half-microcells. These first and second micro pumping systems are independent from each other such that the positive liquid electrolyte and the negative liquid electrolyte are only in contact inside the respective battery microcells. The first micro pumping system and the second micro pumping system are configured to supply the positive liquid electrolyte and the negative liquid electrolyte, respectively, at a flow rate such that the positive liquid electrolyte and the negative liquid electrolyte are under a laminar flow regime inside the battery microcells. The positive liquid electrolyte and the negative liquid electrolyte are in direct contact inside the membraneless battery microcells creating an interphase therebetween for transferring ion charge carriers between the liquid electrolytes. Thus, only molecular diffusion intervenes in the mixing of the positive and negative liquid electrolytes. The flow rates at which the positive and negative liquid electrolytes are supplied to the battery reactor may be substantially the same or may be different. In addition to the micro pumping systems, the flow circulation system may comprise other components to manage, monitor and modify the electrolyte flows between the tanks and the battery reactor. Examples of such components are microvalves, flow meters, etc. In turn, the micro pumping systems may be formed by one or more micropumps, or any other fluid micro impulsion device, connected to each other in series or in parallel.

As used herein, ion charge carriers may refer to those free particles carrying an electric charge that may be transferred between electrolytes to compensate charge variations due to redox reactions that take place within the battery reactor.

The battery management system is configured to cause the flow circulation system to supply the liquid electrolytes to the battery reactor at the required rates and simultaneously supply an electrical current through the electrodes to electrically charge the redox microfluidic energy storage system or to cause the flow circulation system to supply the liquid electrolytes to the battery reactor at the required rates such that an electrical current is released through the electrodes to electrically discharge the redox microfluidic energy storage system.

The discharging process will happen when the chemical potential between the electrodes is high enough to spontaneously generate an output electrical current through the electrodes and the charging process will happen when an external current is applied to the electrodes.

The integration of a redox battery reactor at the microscale together with a microfluidic flow circulation system provides an extremely precise and tight control over the electrolyte flows at the microscale within the battery reaction cells. This allows the use of membranes or other physical barriers between electrolytes to be avoided and ion charge carrier mobility between electrolytes within the battery reaction cells to be increased, while the crossover effect or mixing between electrolytes is significantly minimized.

As used herein, the battery management system may be at least one of a central processing unit (CPU), a semiconductor-based microprocessor, a programmable PLC, a graphics processing unit (GPU), a field-programmable gate array (FPGA) configured to retrieve and execute instructions, other electronic circuitry suitable for the retrieval and execution instructions stored on a machine-readable storage medium, or a combination thereof, said instructions being to perform the functionalities herein disclosed. The battery management system may be fed with data received from the different sensors throughout the redox microfluidic energy storage system and/or from other external devices and will manage the operation of the redox microfluidic energy storage system.

As used herein, the flow circulation system refers to the integrated assembly whose objective is precisely and accurately pumping and controlling flow rate for each electrolyte stream. The flow circulation system may establish the appropriate flow sequence depending on several factors, including the state of charge of the redox microfluidic energy storage system and their operating mode, considering a performing flow range between 0 and 1000 µl/min in each reaction microchannel of the battery reactor and ensuring a laminar regime of the electrolyte through reaction microchannels.

In some embodiments, the battery management system is configured to adjust the electrolyte flow rates within the battery reactor based on the state of charge of the redox microfluidic energy storage system and at least one of a value of a current circulating through the electrodes and a power to be delivered by the redox microfluidic energy storage system or to be received from an external source. Said current circulating through the electrodes may be the current provided by the external source during the charging process or the current generated in the electrodes during the discharging process. The battery management system may receive a request for the redox microfluidic energy storage system to deliver a particular amount of power to a power consumption device or for the redox microfluidic energy storage system to store a particular amount of energy by receiving a particular amount of power from the external source, more particularly, in the electrolytes of the redox microfluidic energy storage system. Said request may be provided by a user or by the external device that is directly demanding an amount of power by consuming the energy in the redox microfluidic energy storage system or that is directly requesting to deliver an amount of power to store energy in the redox microfluidic energy storage system. The electrolyte flow rates determined by the battery management system will guarantee the minimum flow of the electrolytes within the battery reactor necessary for the redox reaction to take place at the desired rate and for maintaining the laminar flow regime of the electrolytes.

In some embodiments, the battery management system comprises a power management unit, an interphase management unit and a fluidic management unit. The power management unit is configured to receive the request and determine whether a stoichiometric flow rate setpoint at which the required amount of power delivered or consumed in the redox microfluidic energy storage system is feasible. To do so, the power management unit may check the current state of charge of the battery redox microfluidic energy storage system to determine if there is enough energy stored in the system to deliver the required amount of power or to determine whether there is enough storage capacity in the system for storing more energy at the required amount of power. If so, the battery management system is configured to calculate the corresponding stoichiometric flow rate setpoint. In turn, the interphase management unit is configured to determine respective flow rates of the positive liquid electrolyte and the negative liquid electrolyte at the inlets and outlets of the battery reactor based on the calculated stoichiometric flow rate setpoint. The fluidic management unit is further configured to determine an operation mode for the fluid circulation system such that the determined flow rates at the inlets and outlets of the battery reactor are reached. Said operation mode for the fluid circulation system may determine the operational parameters of all or part of the components of the fluid circulation system that may affect the flow rates at the inlets and outlets of the battery reactor. For example, the operational parameters may be the pumping power of the micropumps or the particular passageway of the microvalves, among many other operational parameters of these or other components of the micro pumping systems. The power management unit, the interphase management unit and the fluidic management unit comprise the hardware and software necessary for carrying out the functionalities herein disclosed.

In some embodiments, the positive electrode half-microcell and the negative electrode half-microcell of each battery microcell define a reaction microchannel therebetween through which the positive liquid electrolyte and the negative liquid electrolyte flow in parallel in a laminar regime. Inter-diffusion between electrolytes is generally restricted to the interfacial width at the center of said reaction microchannel.

In some embodiments, the redox microfluidic energy storage system comprises flow regulating means arranged in microfluidic conduits of the flow circulation system between the outlet of the battery reactor and the respective tank. These flow regulating means are configured to regulate the fluid electrolyte flow rate exiting the battery reactor, preferably by adjusting the passageway of the microfluidic conduit, based on a viscosity difference between both fluid electrolytes to balance the interphase therebetween inside the battery reactor. The viscosity of the electrolytes will vary with the redox species exchange (i.e., with the ion charge carriers exchange) between them and the change in oxidation states of the active species due to redox reactions taking place. Therefore, depending on the state of charge of the microfluidic energy storage system, the viscosity of each of the electrolytes will be different and such viscosity difference between both fluid electrolytes should be compensated to maintain a centered interphase and minimize crossover mixing. To measure the viscosity of the electrolytes, the redox microfluidic energy storage system may comprise viscometers arranged in the microfluidic conduits through which the electrolytes flow. Alternatively, the redox microfluidic energy storage system may determine the viscosity of the electrolyte from a pressure difference between electrolytes measured by pressure sensors arranged in the respective micro conduits, or may be derived from state of charge values (correlation ex-situ curves can be obtained and used), or may be obtained using colorimeters (in some active species there is a direct relationship between the color of an electrolyte and the number of redox species that it contains). In this way advective mixing of the electrolytes is avoided and thus, efficiency and capacity of the redox microfluidic energy storage system are significantly increased and the need for chemical rebalancing is delayed.

In some embodiments, the flow regulating means may be piezoelectric microvalves, pneumatic microvalves (e.g., quake valves) or Shape Memory Alloy (SMA) valves, among many others. Microvalves, i.e., valves at the microscale, are configured to adjust or modify their passageway, by changing the hydraulic diameter of their cross-section, to change the flow rate of the fluid that is passing through the microfluidic conduit. They present an extremely high control over their passageway and thus, also over the fluid flow that passes through them. Piezoelectric microvalves incorporate more robust and simple actuators than other kinds of valves.

In some embodiments, the redox microfluidic energy storage system comprises pneumatic compressors fluidly connected to the respective pneumatic microvalves, wherein the pneumatic compressors are configured to actuate the pneumatic microvalves. These pneumatic compressors use air to actuate the valves so they open or close to adjust their passageways. These pneumatic microvalves have a higher stability, resolution, and accuracy than other valves, which provides a better control over the fluid flowing through them.

In some embodiments, the micro pumping systems comprise micropumps, preferably piezoelectric micropumps, to supply the liquid electrolytes to the battery reactor. As used herein, micropumps may refer to pumps with functional dimensions at the microscale. Said micro pumping systems may comprise one single micropump or may comprise a plurality of micropumps connected in series to have a better control over the flow rate with which the fluid is being pumped and to reach high pump rates.

In some embodiments, the flow rates at which the positive fluid electrolyte and the negative fluid electrolyte flow within the membraneless battery microcells is selected from a range of 0 to 1000 µl per minute. Such flow rates will ensure a laminar regime of the electrolytes through reaction microchannels of the microcells.

In some embodiments, the redox microfluidic energy storage system comprises a first inlet flow sensor and a first outlet flow sensor arranged in respective microfluidic conduits of the flow circulation system and a second inlet flow sensor and a second outlet flow sensor arranged in respective microfluidic conduits of the flow circulation system. The first inlet flow sensor and the second inlet flow sensor are configured to measure the flow rate of the positive liquid electrolyte and of the negative liquid electrolyte, respectively, at the inlet of the battery reactor. In turn, the first outlet flow sensor and the second outlet flow sensor are configured to measure the flow rate of the positive electrolyte and of the negative electrolyte, respectively, at the outlet of the battery reactor. In some other embodiments, there may be a different number of flowmeters located in different points of the microfluidic circuits. The redox microfluidic energy storage system may also incorporate other kind of sensors, such as viscometers, pressure sensors, temperature sensors, etc., arranged in different points of the redox microfluidic energy storage system.

In some embodiments, the battery reactor and the flow circulation system are integrated into a same main body, e.g., a solid module. Therefore, the battery reactor and the flow circulation system are developed at the micro scale and integrated in a compact module. In some examples, at least part of the components of the redox microfluidic energy storage system may be integrated or formed within said main body and other components may be removably or fixedly coupled to the outer surfaces of the main body.

A second object of the present invention is a method for charging the redox microfluidic energy storage system previously described. The method comprises the steps of:
supplying, by the first micro pumping system, the positive liquid electrolyte to the positive electrode half-microcell of the battery microcells;
simultaneously supplying, by the second micro pumping system, the negative liquid electrolyte to the negative electrode half-microcell of the battery microcells;
applying an electrical current through the positive electrodes and the negative electrodes of the battery microcells while the positive liquid electrolyte and the negative liquid electrolyte are simultaneously flowing in a laminar regime through the positive electrode half-microcell and the negative electrode half-microcell, respectively, such that redox reactions of active species in the electrolytes take place in the electrodes surface and ion charge carriers are transferred between both electrolytes to compensate changes in the oxidation state of the active species within them, creating a difference in chemical potential between the positive and negative liquid electrolytes; and
storing the positive liquid electrolyte and the negative liquid electrolyte into the positive electrolyte tank and the negative electrolyte tank, respectively.

In some embodiments, the method further comprises receiving, at a power management unit of the battery management system, a request determining an amount of power to store energy in the redox microfluidic energy storage system, more particularly, in the electrolytes of the redox microfluidic energy storage system. The power request may be provided by a user or by the external device that is going to provide the energy to be stored.

Then, the power management unit determines whether a stoichiometric flow rate setpoint at which the particular amount of power can be stored is feasible. To do so, the power management unit may check the current state of charge of the battery redox microfluidic energy storage system to determine if there is enough storage capacity in the system for storing energy at the required amount of power.

If reaching the stoichiometric flow rate setpoint is feasible, the power management unit calculates the corresponding stoichiometric flow rate setpoint and an interphase management unit of the battery management system determines the flow rates for the positive liquid electrolyte and the negative liquid electrolyte at the inlets and outlets of the battery reactor that are necessary for reaching the calculated stoichiometric flow rate setpoint. After that, a fluidic management unit of the battery management system determines an operation mode for the fluid circulation system, e.g., for the first and second micro pumping systems and for the microvalves arranged at the outlets of the battery reactor, such that the determined flow rates at the inlets and outlets of the battery reactor are reached.

In some embodiments, the battery management system actively monitors the state of charge of the redox microfluidic energy storage system and carries the steps of the method previously disclosed until the maximum energy capacity has been reached and/or the power request for storing energy is finished. The battery management system may monitor the state of charge of the redox microfluidic energy storage system in a continuous or periodic fashion.

A third object of the invention is a method for discharging the redox microfluidic energy storage system previously disclosed. The method comprises:
supplying, by the first micro pumping system, the positive liquid electrolyte to the positive electrode half-microcell of the battery microcells. There will be a difference in chemical potential between the positive liquid electrolyte and the negative liquid electrolyte previously stored in the tanks of the redox microfluidic energy storage system so the discharge process can take place;
simultaneously supplying, by the second micro pumping system, the negative liquid electrolyte to the negative electrode half-microcell of the battery microcells, such that redox reactions of active species in the electrolytes take place in the electrodes surface and ion charge carriers are transferred between both electrolytes to compensate changes in the oxidation state of the active species between them, releasing an electrical current that circulates through the electrodes of the positive and negative electrode half-microcells; and
storing the positive liquid electrolyte and the negative liquid electrolyte into the positive electrolyte tank and the negative electrolyte tank, respectively.

In some embodiments, the method comprises receiving, at a power management unit of the battery management system, a request indicating an amount of power to be delivered by the redox microfluidic energy storage system. The request may be provided by a user or by an external power consumption device that is demanding the requested power. Then, the power management unit determines whether a stoichiometric flow rate setpoint at which the particular amount of power can be delivered is feasible. The power management unit may check the current state of charge of the battery redox microfluidic energy storage system to determine if there is enough energy stored in the system to deliver the required amount of power. The power management unit calculates the stoichiometric flow rate setpoint when it is feasible and an interphase management unit of the battery management system determines the flow rates for the positive liquid electrolyte and the negative liquid electrolyte at the inlets and outlets of the battery reactor based on the calculated stoichiometric flow rate setpoint. After that, a fluidic management unit of the battery management system determines an operation mode for the fluid circulation system, e.g., for the micro pumping systems and for the microvalves arranged at the outlets of the battery reactor, such that the determined flow rates at the inlets and outlets of the battery reactor are reached.

In some embodiments, the method comprises monitoring, by the battery management system, the state of charge of the redox microfluidic energy storage system in a continuous or periodic manner and carrying out the steps of the method previously described until the minimum energy capacity of the battery has been reached and/or the power request for delivering energy has finished.

The redox microfluidic energy storage system herein described presents several advantages and/or differences compared with previous devices. In particular, this solution integrates membraneless redox flow batteries within microfluidic systems providing a reliable and accurate control over the electrolyte streams that flow in a laminar regime within the reactors in order to optimize charging/discharging performance of such systems and to extend their operational life. It also minimizes crossover effect between electrolytes and allows a more stable battery operation. The overall performance and efficiency of the redox microfluidic energy storage system is further increased by working at the microscale. Other advantages are the reduction of the manufacturing costs since microscale manufacturing requires a lower initial investment than macroscale manufacturing and the reduction of costs associated with the simplification of the battery reactor design due to the disposal of a physical barrier separating the electrolytes. Avoiding using said physical barrier also extends the operational life of the battery reactor.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a block diagram of a redox microfluidic energy storage system, according to a particular embodiment of the invention.
Figure 2A and 2B show perspective views of a membraneless battery microcell, according to a particular embodiment of the invention.
Figures 3A-C show cross sectional views of the membraneless battery microcell of Figure 2 along line A-A, including different types of electrodes.
Figure 4A shows a plant view of a battery microreactor, according to a particular embodiment of the invention.
Figure 4B shows a cross sectional view of the battery microreactor of Figure 4A along line B-B, including a stack of the membraneless battery microcells of Figure 2.
Figure 5 shows a perspective view of a redox microfluidic energy storage system without the electrolyte tanks, according to a particular embodiment of the invention
Figure 6 shows a plant view of the redox microfluidic energy storage system of Figure 5.
Figure 7 shows a block diagram of a battery management system, according to a particular embodiment of the invention.
Figure 8 shows a flow diagram of a method for charging the redox microfluidic energy storage system of Figure 1, according to a particular embodiment of the invention.
Figure 9 shows a flow diagram of a method for discharging the redox microfluidic energy storage system of Figure 1, according to a particular embodiment of the invention.

### DETAILED DESCRIPTION OF THE INVENTION

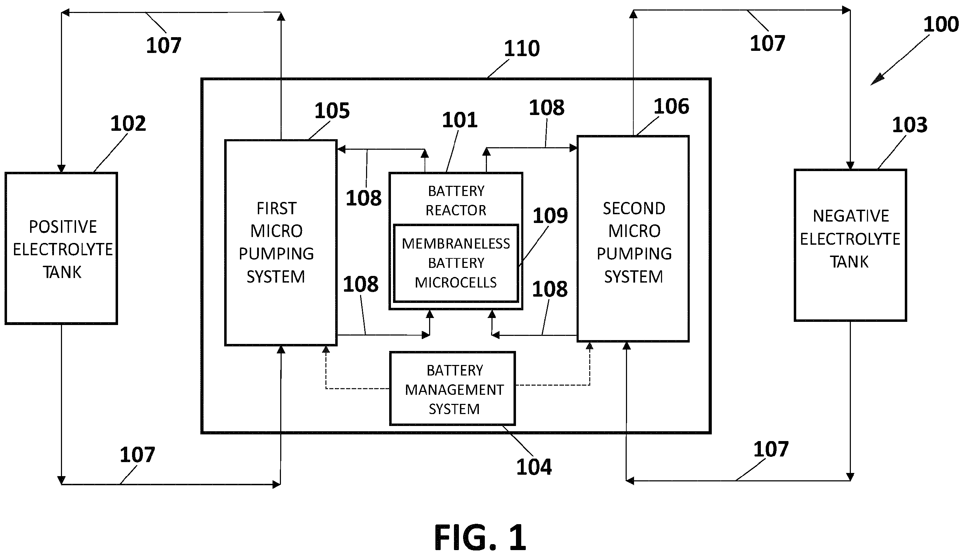

Figure 1 shows a block diagram of a redox microfluidic energy storage system 100, according to a particular embodiment of the invention. It should be understood that the storage system 100 of Figure 1 may include additional components and that some of the components described herein may be removed and/or modified without departing from a scope of the described storage system 100. Additionally, implementation of the storage system 100 is not limited to such embodiment.

The redox microfluidic energy storage system 100 comprises a battery reactor 101, a positive electrolyte tank 102 storing a positive liquid electrolyte, a negative electrolyte tank 103 storing a negative electrolyte, a battery management system 104 and a flow circulation system formed by a first micro pumping system 105, a second micro pumping system 106 and the microfluidic conduits 107 that fluidly communicate the positive electrolyte tank 102 and the negative electrolyte tank 103 with the first micro pumping system 105 and with the second micro pumping system 106, respectively. The flow circulation system also comprises the microfluidic conduits 108 that fluidly communicate the first micro pumping system 105 and the second micro pumping system 106 with the battery reactor 101. In such embodiment, the first and second micro pumping systems 105,106 may further comprise microvalves (not shown) arranged in the microfluidic conduits of the micro pumping systems 105,106 and at the outlet of the battery reactor 101, to adjust electrolyte flow rates. In turn, the battery reactor 101 comprises a plurality of membraneless battery microcells 109 fluidly connected in parallel to each other and to the first micro pumping system 105 and to the second micro pumping system 106.

The first micro pumping system 105 is configured to supply the positive liquid electrolyte from the positive electrolyte tank 102 to the membraneless battery microcells 109 and the second micro pumping system 106 is configured to supply the negative liquid electrolyte from the negative electrolyte tank 103 to the membraneless battery microcells 109. These first and second micro pumping systems 105,106 are independent from each other such that the positive liquid electrolyte and the negative liquid electrolyte are only in contact inside the respective battery microcells 109.

The battery management system 104 is configured to manage the actuators, including fluid pumping or injection systems and flow regulation systems, such as micropumps or microvalves, among others, of the flow circulation system to cause the liquid electrolytes to be supplied to the membraneless battery microcells 109 at the required flow rate to maintain the laminar flow regime of the electrolytes within the battery reactor 101 so the redox microfluidic energy storage system 100 can be charged or discharged. This required flow rate of the electrolytes may range between 0 and 1000 µl per minute to ensure such laminar flow regime.

The battery reactor 101, the positive electrolyte tank 102, the negative electrolyte tank 103, the battery management system 104, the first micro pumping system 105, the second micro pumping system 106, the microfluidic conduits 108 and at least part of the microfluidic conduits 107 are integrated into the same body or module 110. This solution is more compact, simple and easy to operate.

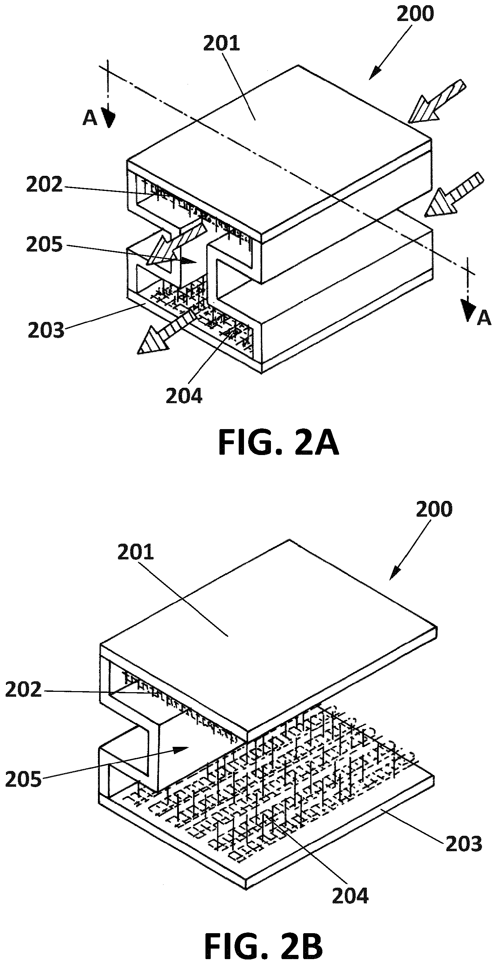

Figures 2A and 2B show two perspective views of a membraneless battery microcell 200, according to a particular embodiment of the invention. It should be understood that the membraneless battery microcell 200 of Figures 2A and 2B may include additional components and that some of the components described herein may be removed and/or modified without departing from a scope of the described membraneless battery microcell 200. Additionally, implementation of the membraneless battery microcell 200 is not limited to such embodiment.

The membraneless battery microcell 200 comprises a positive electrode half-microcell 201 housing a positive electrode 202 and a negative electrode half-microcell 203 housing a negative electrode 204. The electrodes 202,204 are "forest-type" electrodes formed by a plurality of carbon microtubes or nanotubes. A different type of electrodes made of other materials may be also used provided that they are valid for carrying the required redox reactions over them. Each half-microcell 201,203 is T-shaped and is fluidly connected to its opposite T-shaped half-microcell 201,203 creating a reaction microchannel 205 therebetween. The positive liquid electrolyte and the negative liquid electrolyte flow in parallel in a laminar fashion through this reaction microchannel 205 and electrolyte inter-diffusion is generally restricted to the interfacial width at the center of said reaction microchannel 205. This particular geometry of the membraneless battery microcell 200 maximizes the available space for the electrodes 202,204 allowing having bigger electrodes which will reduce diffusion times for ion charge carriers exchange within the electrolytes and increase the energy transfer rate, at the same time that the resistance to ion charge carrier diffusion from one electrolyte to the other is minimized. Besides, this particular geometry facilitates its stacking.

The arrows show the flow direction of each one of the two electrolytes that flow through the membraneless battery microcell 200. While the arrows 206,207 are shown in the same direction, the electrolytes may also flow in opposite directions. Besides, the flow rates at which each one of the positive and negative liquid electrolytes are supplied to the battery microcells 200 may be substantially the same or may be different.

While the embodiment of figures 2A and 2B shows a membraneless battery microcell with a particular geometry and with a particular type of electrodes, other membrane less battery microcells with different geometries and types of electrodes may be implemented in the redox microfluidic energy storage system of the present invention.

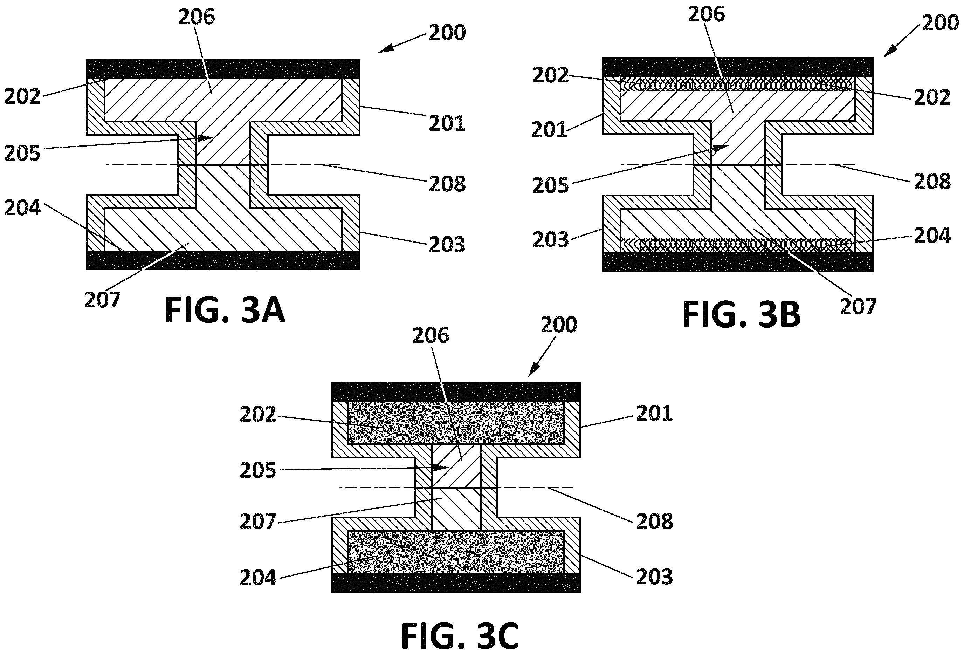

Figures 3A-C show cross sectional views of the membraneless battery microcell 200 of Figure 2 along line A-A, including different types of electrodes 202,204.

Figure 3A comprises plane electrodes 202,204 attached to the inner surfaces of the long sections of the positive and negative electrode half-microcells 201,203, respectively.

Figure 3B comprises forest-type electrodes 202,204 attached to the inner surfaces of the long sections of the positive and negative electrode half-microcells 201,203, respectively. Said forest-type electrodes may be forest-like carbon nanotubes electrodes or similar.

Figure 3C comprises porous electrodes 202,204 substantially filling the space defined by the long sections of the positive and negative electrode half-microcells 201,203. The forest-type electrodes and the porous electrodes have a larger active surface than plane electrodes and thus, they present a higher efficiency and better performance.

In some other implementations of the present invention, other types of electrodes with different dispositions within the half-microcells may be used. For example, the electrodes may incorporate fins or any other protrusions with geometries that extend from the main plane in which the electrodes are contained.

In all cases, the positive liquid electrolyte 206 and the negative liquid electrolyte 207 fill the respective positive and negative electrode half-microcells 201,203 creating an interphase 208 therebetween for transferring ion charge carriers between the liquid electrolytes 206,207. Only molecular diffusion of ion charge carriers intervenes in the mixing of the positive and negative liquid electrolytes 206,207.

The electrodes 202,204 may be made of carbon materials, transition metal oxides (such as TiO2, SnO2, Co3O4, NiO, Fe2O3, V2O5, Cu2O, MnO2, and GeO2), transition metal dichalcogenides (such as MoS2 and WS2), elementary substances (such as Si, Ge and Au), intercalation compounds (such as Li4Ti5O12, LiCoO2, LiMn2O4, LiFePO4), and conductive polymers (polypyrrole and polyaniline), among many others.

Preferably, the electrodes 202,204 will be carbon-based electrodes with a porous structure in order to facilitate the flow of the electrolytes 206,207 through the pores of the electrodes 202,204. More preferably, the electrodes may have a structure electrically conductive to improve the conduction of the electrical current generated during the discharge of the system or provided during the charging of the system. Besides, the porosity of the electrodes will be, preferably, homogeneous in order to facilitate the uniform distribution of the electrical current that flows through them. Alternatively, the electrodes may present a porosity gradient to optimize the distribution of the electrical current in the porous electrodes and to optimize the battery microcell performance.

When the electrodes 202,204 have porous structures, the porous materials of the electrodes 202,204 can include fibrous carbons, porous metals, felts, activated carbons, silica, gels, foams, sponges, ceramics, filters, meshes, polymers and metal-organic structures, among others. In addition, the porosity of the electrodes 202,204 may be preferably high, such that the pore size can range approximately from 1 to 120 micrometers. The porous material may also have a high overall active surface area exposed to the electrolyte flow in order to improve its efficiency and performance.

Electrolytes are a mixed solution of electroactive chemical elements or redox species and a solvent with secondary components to improve the performance as charge carrier species to increase conductivity of the fluid. By selecting the appropriate electrolytes, the nominal voltage of the redox microfluidic energy storage system is modified. In other words, the voltage difference between the positive electrode and the negative electrode of the battery microcell will depend on the electrolyte used, for example, when the solvent is aqueous-based, it is usually between 0.5 and 1.6V.

In general, any aqueous or non-aqueous electrolyte can be used, where aqueous electrolytes are solutions of acids, bases or salts in water and, on the other hand, non-aqueous electrolytes can be solutions of salts in organic solvents or ionic liquids. Likewise, the redox species can be organic or inorganic redox species. It is also important that these electrolytes are compatible with each other to avoid poisoning in case of mixing of the species or leakage from any conduit of the flow circulation system.

The organic redox species can be any organic redox species able to carry out reversible redox reactions and with the ability of remaining dissolved in the electrolyte when its oxidation state changes. Therefore, it is desirable that the organic redox species does not decompose or degrade and does not form solids or gaseous species. These organic redox species include the quinone family, among others. The inorganic redox species can be selected from metals and oxide metals, such as Fe, Cu, Co, Cr, V, Ni, Mn, Ru, U, among others.

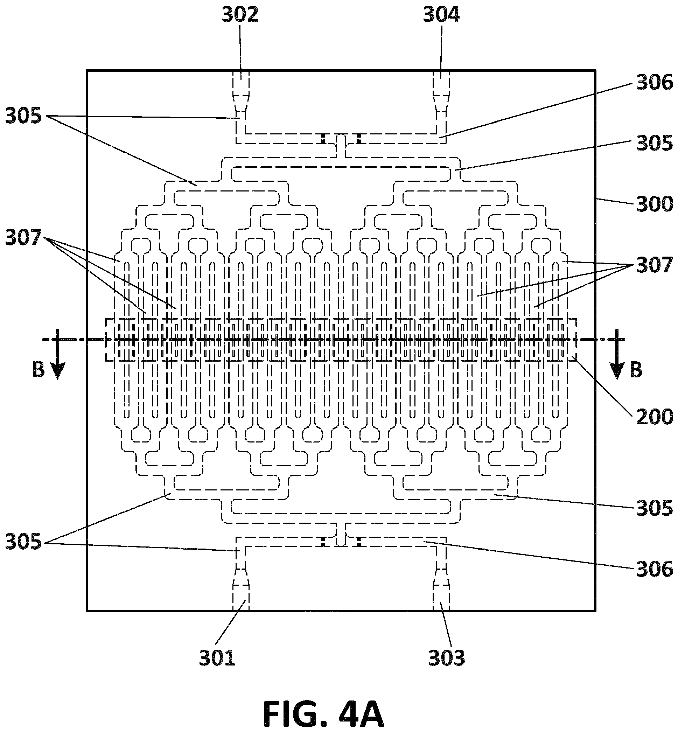

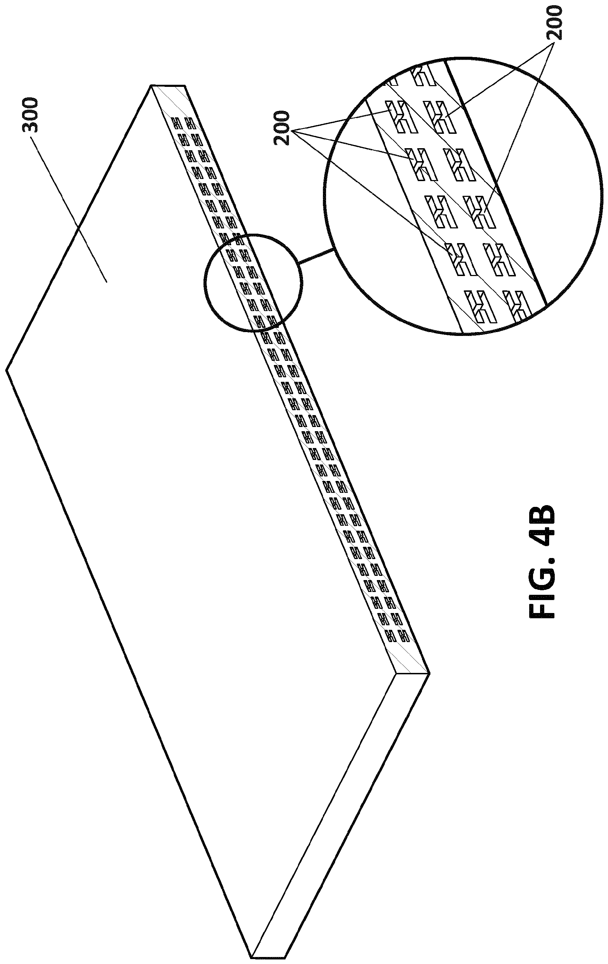

Figure 4A shows a plant view of a battery microreactor 300, according to a particular embodiment of the invention. It should be understood that the battery microreactor 300 of Figure 4A may include additional components and that some of the components described herein may be removed and/or modified without departing from a scope of the described battery microreactor 300. Additionally, implementation of the battery microreactor 300 is not limited to such embodiment. Figure 4B shows a cross sectional view of the battery microreactor of Figure 4A along line B-B, showing a stack of the membraneless battery microcells of Figures 2 and 3.

The battery microreactor 300 comprises a first inlet 301 for the positive liquid electrolyte input into the positive electrode half microcells 202, a first outlet 302 for the positive liquid electrolyte output, a second inlet 303 for the negative liquid electrolyte input into the negative electrode half microcells 203 and a second outlet 304 for the negative liquid electrolyte output. It is important to notice that the first inlet 301 and the first outlet 302 with the micro conduits 305 through which the positive liquid electrolyte flows are independent from the second inlet 303, the second outlet 304 and the micro conduits 306 through which the negative liquid electrolyte flows. The two electrolytes 206,207 contact each other only within the reaction microchannels 205 of the membraneless battery microcells 200.

Since Figure 4A shows a plant view of the battery microreactor 300, most of the micro conduits through which the negative liquid electrolyte flows (with the exception of the portion 306 of the microcircuits that directly connect with the second inlet 303 and the second outlet 304) are located in correspondence and under the micro conduits 305 through which the positive liquid electrolyte flows. Besides, as can be seen in figure 4B the stack of membraneless battery microcells 307 comprises two membraneless battery microcells 307 per column and thirty-two membraneless battery microcells per row. The positive fluid electrolyte 206 and the negative fluid electrolyte 207 that enters into the solid body of the battery microreactor 300 via the first and second inlets 301,303 flow through the positive and negative electrode half microcells 201,203, respectively, of each one of the membraneless battery microcells 200 as shown in figures 2 and 3.

The main body of the battery microreactor 300 is a solid piece in which the inlets, outlets, micro conduits and the membraneless battery microcells have been bore through.

While Figures 4A and 4B show a particular geometry and disposition of the inlets, outlets and micro conduits of the battery microreactor, said battery microreactor may have different geometries, layouts and designs. Besides, the battery microreactor may have a different number of membraneless battery microcells with different shapes and geometries.

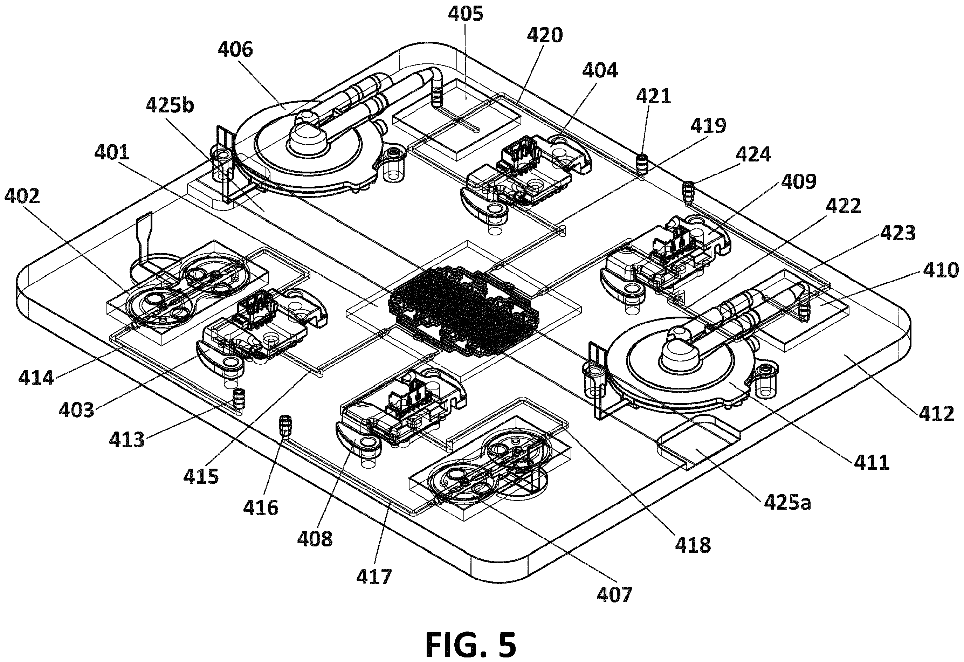

Figure 5 shows a perspective view of a redox microfluidic energy storage system 400 without the electrolyte tanks, according to a particular embodiment of the invention. It should be understood that the storage system 400 of Figure 5 may include additional components and that some of the components described herein may be removed and/or modified without departing from a scope of the described storage system 400. Additionally, implementation of the storage system 400 is not limited to such embodiment.

The redox microfluidic energy storage system 400 comprises a battery reactor 401, a first micropump 402, a first inlet flowmeter 403, a first outlet flowmeter 404, a first microvalve 405, a first micro compressor 406 for actuating the first microvalve 405, a second micropump 407, a second inlet flowmeter 408, a second outlet flowmeter 409, a second microvalve 410 and a second micro compressor 411 for actuating the second microvalve 410.

In such embodiment, while the first and second micropumps 402,407, the battery reactor 401 and the first and second microvalves 405,410 are integrated within the main body 412 or microchip, the rest of the cited components of the redox microfluidic energy storage system 400 shown in Figure 5 are fluidly coupled to said main body 412.

The first micropump 402 is fluidly connected to a first inlet 413 of the main body 412. Said first inlet 413 is also fluidly connected to the outlet of the positive electrolyte tank (not shown in this figure) from which the positive liquid electrolyte is retrieved. The first micropump 402 creates a vacuum to suck the positive liquid electrolyte from the positive electrolyte tank, via micro conduit 414, and pumps it towards the battery microcell 401, via micro conduit 415, at the required flow rate. The first inlet flowmeter 403, that is arranged in the via micro conduit 415, continuously monitors the flow rate of the positive liquid electrolyte flowing through the micro conduit 415 so that the battery management system (not shown in this figure) is able to instruct the first micropump 402 to adjust its pumping power in order to maintain said flow rate within the predefined margins.

Similarly, the second micropump 407 is connected to a second inlet 416 of the main body 412 and is configured to retrieve the negative liquid electrolyte from a negative storage tank (not shown), via micro conduit 417, and pumps it towards the battery microcell 401, via micro conduit 418, at the required flow rate. The second inlet flowmeter 408, that is arranged in the via micro conduit 418, continuously monitors the flow rate of the negative liquid electrolyte flowing through the micro conduit 418 so that the battery management system is able to instruct the second micropump 407 to adjust its pumping power in order to maintain said flow rate within the predefined margins. The flow rates of the positive and negative liquid electrolytes may be similar or different depending on different factors.

The positive liquid electrolyte exits the battery reactor 401 through micro conduit 419 towards the first microvalve 405. The first outlet flow meter 404, that is arranged in the via micro conduit 419, continuously monitors the flow rate of the positive liquid electrolyte flowing through the micro conduit 419 so that the battery management system is able to instruct the first micro compressor 406 to modify the passageway of the first microvalve 405 in order to ensure that flow rate within the battery reactor 401 is within the predefined margins that guarantee the laminar flow regime of the electrolyte and maintain the electrolyte interphase centered minimizing crossover mixing. The outlet of the first microvalve 405 is fluidly connected to a first outlet 421 of the main body 412 via the micro conduit 420. The first outlet 421 will be fluidly connected to the inlet of the positive electrolyte tank. The redox microfluidic energy storage system 400 also comprises electrochemical sensors (not shown in this figure) that may be located within the tanks or the micro conduits to measure the amount of ion charge carriers and the redox active species in each electrolyte in order to derive the viscosity of each electrolyte and also the state of charge of the redox microfluidic energy storage system.

Similarly, the negative liquid electrolyte exits the battery reactor 401 through micro conduit 422 towards the second microvalve 410. The second outlet flow meter 409, that is arranged in the via micro conduit 422, continuously monitors the flow rate of the negative liquid electrolyte flowing through the micro conduit 422 so that the battery management system is able to instruct the second micro compressor 411 to modify the passageway of the second microvalve 410 in order to ensure that flow rate within the battery reactor 401 is within the predefined margins that guarantee the laminar flow regime of the electrolyte and maintain the electrolyte interphase centered minimizing crossover mixing. The outlet of the second microvalve 410 is fluidly connected to a second outlet 424 of the main body 412 via the micro conduit 423. The second outlet 424 will be fluidly connected to the inlet of the negative electrolyte tank. Based on the calculated viscosity difference between the electrolytes, the battery management system instructs the micro compressors 406,411 to modify the passageways of the microvalves 405,410 to balance the interphase therebetween within the battery reactor 401.

The electrodes of the battery reactor 401 are electrically connected to respective conductive strips 425a-b through which an electrical current is provided from an external source during the charge of the redox microfluidic energy storage system or through which the electrical current generated during the discharge of the redox microfluidic energy storage system is provided to an external device. The conductive strip 425a may be electrically connected to the positive electrodes 202 and the conductive strip 425b may be electrically connected to the negative electrodes 204, or vice versa.

In such embodiment, the micro conduits 414,415,417,418,419,420,422 and 423 are also integrated within the main body 412. The micro compressors 406,411, the micropumps 402,407 and the flowmeters 403,404,408,409 comprise electrical and electronic connectors to a power source and to the battery management system to receive electrical power and operational instructions.

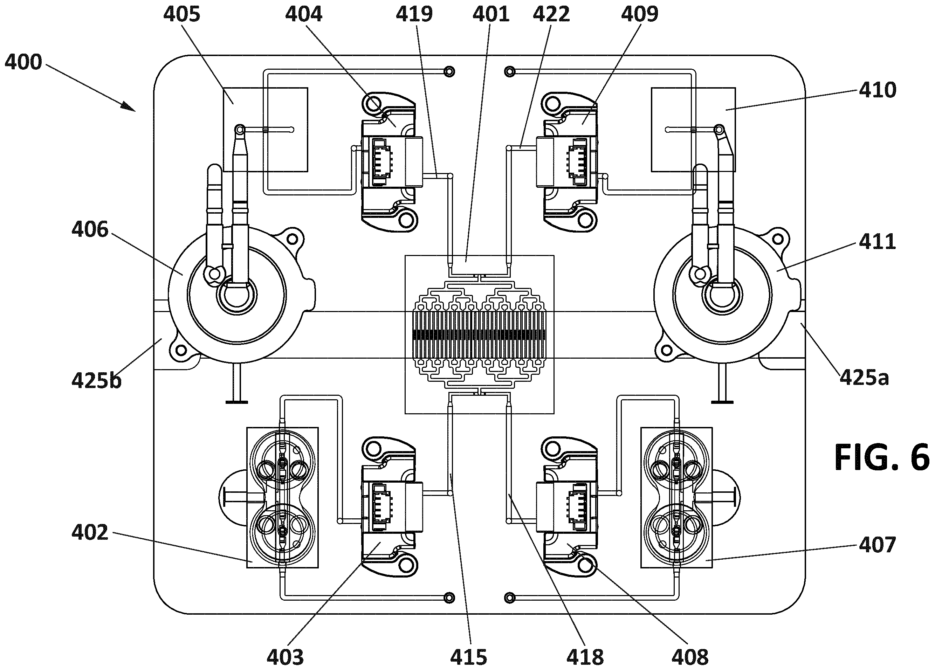

Figure 6 shows a plant view of the redox microfluidic energy storage system of Figure 5. The battery reactor 401 comprises a stack of battery microcells connected in parallel to each other. In such embodiment, only the positive electrode half-microcells are shown. The negative electrode half-microcells will be located immediately below the positive electrode half-microcells. While the positive electrode half-microcells are fluidly connected to the micro conduits 415,419 through which the positive liquid electrolyte flows, the negative electrode half-microcells are fluidly connected to the micro conduits 418,422 through which the negative liquid electrolyte flows. The flow rate at which the positive liquid electrolyte flows through all the positive electrode half-microcells is the same. The flow rate at which the negative liquid electrolyte flows through all the negative electrode half-microcells is the same. However, the flow rates at which the positive and negative liquid electrodes flow through the battery reactor may be substantially equal or different.

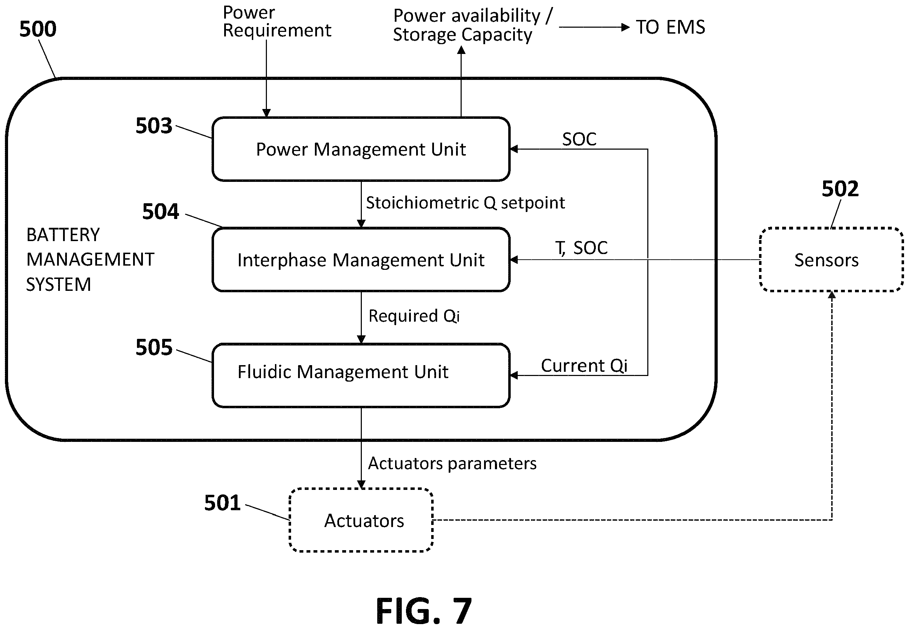

Figure 7 shows a block diagram of a battery management system 500, according to a particular embodiment of the invention. It should be understood that the battery management system 500 of Figure 7 may include additional components and that some of the components described herein may be removed and/or modified without departing from a scope of the described battery management system 500. Additionally, implementation of the battery management system 500 is not limited to such embodiment.

As presented in Figure 1 the battery management system 500 is the component in charge of making the decision, given a request for storing an amount of energy or a request for delivering an amount of power, whether or not it is possible to release the required power with the available energy in the redox microfluidic energy storage system or to store the required energy given the current storage capacity in the redox microfluidic energy storage system. The battery management system 500 is further in charge of managing the flow circulation system to ensure that the working conditions are suitable for providing the demanded power or storing the required energy. In order to achieve these goals, the decision structure of the battery management system 500 interacts with actuators 501 and sensors 502 of the redox microfluidic energy storage system. Then, the battery management system 500 operates as follows:
A request is provided, by a user or an external device, as an initial input to the power management unit 503. This request may be a power requirement for delivering a particular amount of energy by the redox microfluidic energy storage system to a power consumption device, or may be a power requirement for storing energy in the redox microfluidic energy storage system.

This input is firstly evaluated by the power management unit 503 which, receiving information from the sensors about the state of charge (SOC) of the redox microfluidic energy storage system, initially takes the gross decision about if there is a possible stoichiometric flow rate setpoint (stoichiometric Q setpoint) at which the demanded power can be released or received, and calculates the value of this stoichiometric flow rate setpoint. To monitor the SOC, the redox microfluidic energy storage system may comprise electrochemical sensors in contact with the two electrolytes to determine the difference of electrochemical potential between them. Said decision about if there is a possible stoichiometric flow rate setpoint at which the required power can be released or received and the corresponding power availability or storage capacity in the redox microfluidic energy storage system can be sent by the power management unit to an electronic management system (EMS) that will communicate with the user or the external device from which the request has been received, and via the corresponding interphase, to inform them about the existing power availability and storage capacity.

If a stoichiometry flow rate setpoint exists to fulfill that power requirement, then that information is passed to the interphase management unit 504 which, given the gross stoichiometry flow rate setpoint and variables from the sensors 502 such as the temperature (T) of the electrolytes and the SOC, is able to define a proper configuration of the battery microreactor with a centered interphase through selection of individual flow rates at every inlet and outlet (required Qi) of the battery microreactor. This configuration minimizes crossover effect between electrolytes and allows a stable battery operation.

Once the individual flow rates in every inlet and outlet of the battery microreactor are defined for the operation, they will be fed to the fluidic management unit 505 that will calculate specific actuator parameters that will define how the actuators 501 (e.g., micropumps and microvalves of the redox microfluidic energy storage system) should work with the information (current Qi), received from the flowmeters 502 that monitor the flow rates at the inlets and outlets of the battery microreactor, to reach these setpoints defined by the individual flow rates in every inlet and outlet of the microreactor.

If these setpoints of individual flow rates are achieved and the operation is possible, the final step of the battery management system 500 is to confirm the power/storage capacity availability to the electrical management system to do the operation of the battery. Information about whether these setpoints of individual flow rates are achieved is used by the power management unit to confirm that the power capacity is available, and that the stoichiometric flow rate not only exists but is being met and the rest of the battery working conditions are also correct.

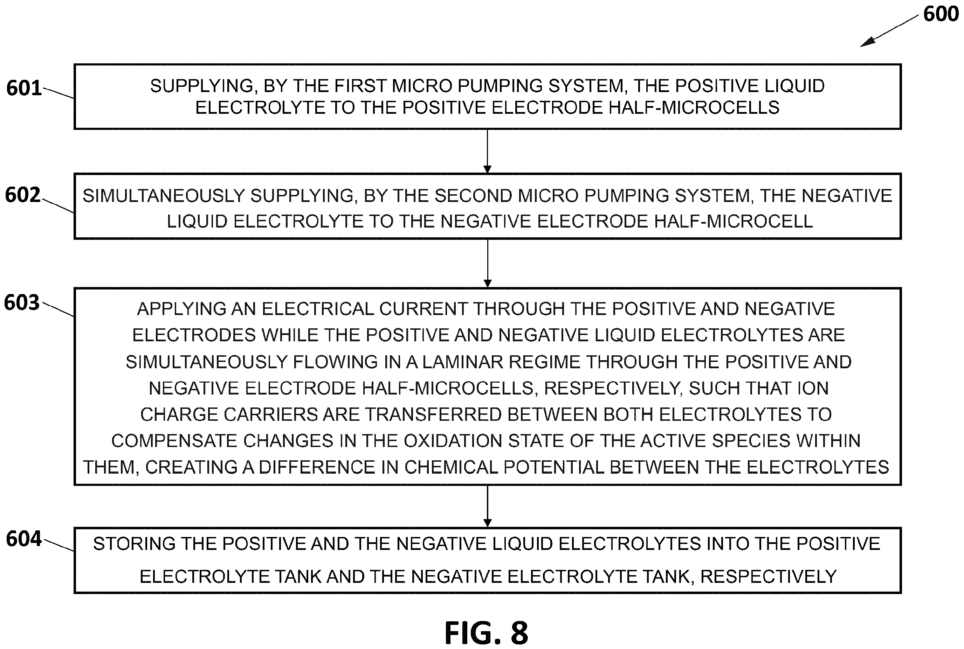

Figure 8 shows a flow diagram of a method 600 for charging the redox microfluidic energy storage system 100 of Figure 1, according to a particular embodiment of the invention.

The general reversible reactions produced in the battery microcells after the passage of electrolytes can be described as:

*A* ↔ *Aⁿ⁺* + *ne⁻*

*B* + *ne⁻* ↔ *Bⁿ⁻*

which are the charge-discharge reactions located at the negative and positive electrodes, respectively. Charge process consists of applying a specific current while electrolyte flows through the battery microreactor 101. Micro pumping systems 105,106 will allow the electrolyte flowing in a laminar regime through the electrode structure inside of the reaction microchannels of the membraneless battery microcells 109, while applying current to these electrodes, for charge redox reactions to take place on the surface of the electrode and obtaining the battery charge process as result. Flow rate adjustment by the pumping systems 105,106 will also depend on the specific applied current. The higher the current applied, the higher the flow rates at which the electrolytes will flow through the battery reactor 101. This charge state will be monitored with open circuit voltage measurements or through different techniques with a variety of sensors involving the properties of the electrolyte, controlling the state of charge of the battery. This charge will be stored in the electrolytes that will return to the tanks 102,103 and flow through repeated cycles across the battery reactor 101 until achieving the desired state of charge in the bulk.

The method 600 comprises the steps of:
supplying 601, by the first micro pumping system 105, the positive liquid electrolyte to the positive electrode half-microcell of the battery microcells 109;
simultaneously supplying 602, by the second micro pumping system 106, the negative liquid electrolyte to the negative electrode half-microcell of the battery microcells 109;
applying 603 an electrical current through the positive electrodes and the negative electrodes of the battery microcells 109 while the positive liquid electrolyte and the negative liquid electrolyte are simultaneously flowing in a laminar regime through the positive electrode half-microcell and the negative electrode half-microcell, respectively, such that redox reactions of active species in the electrolytes take place in the electrodes surface and ion charge carriers are transferred between both electrolytes to compensate changes in the oxidation state of the active species within them, creating a difference in chemical potential between the positive and negative liquid electrolytes; and
storing 604 the positive liquid electrolyte and the negative liquid electrolyte into the positive electrolyte tank 102 and the negative electrolyte tank 103, respectively.

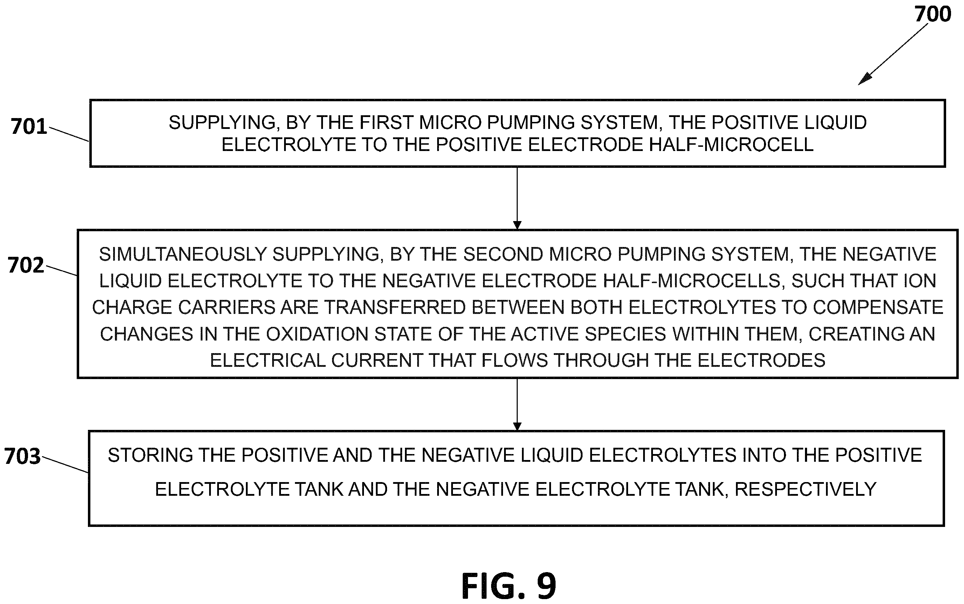

Figure 9 shows a flow diagram of a method 700 for discharging the redox microfluidic energy storage system of Figure 1, according to a particular embodiment of the invention.

When energy stored in the redox microfluidic energy storage system 100 needs to be discharged, the electrolytes flow again into the battery reactor 101 with inverse reactions taking place with respect to the charge process and the electrodes will generate an electrical current to release energy to the outside. To do so, the battery management system will control such a process with information from sensors that will monitor, at least, the state of charge of the electrolytes through the open circuit voltage, or through different techniques with a variety of sensors involving the properties of the electrolytes. Also, the amount of energy released during the discharge process is controlled by the battery management system by regulating the flow rate flowing inside the battery reactor 101 in order to obtain a specific electrical current or a specific performance of the redox microfluidic energy storage system 100. The electrolytes will flow between the tanks 102,103 and the battery microreactor 101 through repeated cycles until achieving the desired state of discharge in the bulk.

Due to the mixing of species between electrolytes, product of diffusive processes and the absence of a physical barrier inside of the microreactor, a rebalancing process may be required after a number of charge-discharge cycles. This rebalancing process may be required depending on the tracking of variations in the capacity of the micro flow battery or any other value that gives an evidence of the presence of species in the opposite stream. Said rebalancing processes may comprise applying electrical currents to both electrolytes so their resulting charge status is nearly zero. For example, some regeneration systems, such as rebalancing cells, could be used to reduce the electrolyte imbalance.

The method 700 comprises the steps of:
supplying 701, by the first micro pumping system 105, the positive liquid electrolyte to the positive electrode half-microcell of the battery microcells 109, existing a difference in chemical potential between the positive liquid electrolyte and the negative liquid electrolyte;
simultaneously supplying 702, by the second micro pumping system 106, the negative liquid electrolyte to the negative electrode half-microcells of the battery microcells 109, such that redox reactions of active species in the electrolytes take place in the electrodes surface and ion charge carriers are transferred between both electrolytes to compensate changes in the oxidation state of the active species within them due to redox reactions, releasing an electrical current that flows through the electrodes of the positive and negative electrode half-microcells; and
storing 703 the positive liquid electrolyte and the negative liquid electrolyte into the positive electrolyte tank 102 and the negative electrolyte tank 103, respectively.

## Claims

1. A redox microfluidic energy storage system (100), comprising a battery reactor (101), a positive electrolyte tank (102) storing a positive liquid electrolyte, a negative electrolyte tank (103) storing a negative liquid electrolyte, a battery management system (104) and a flow circulation system,
wherein the battery reactor (101) comprises a plurality of membraneless battery microcells (109) connected to each other, each battery microcell (109) comprising a positive electrode half-microcell (201) housing a positive electrode (202) and a negative electrode half-microcell (203) housing a negative electrode (204), the positive electrode half-microcell (201) and the negative electrode half-microcell (203) being fluidly connected and located opposite to each other,
wherein the flow circulation system comprises a first micro pumping system (105) configured to supply the positive liquid electrolyte from the positive electrolyte tank (102) to the positive electrode half-microcells (201) and a second micro pumping system (106) configured to supply the negative liquid electrolyte from the negative electrolyte tank (103) to the negative electrode half-microcells (203),
**characterized in that** the first micro pumping system (105) and the second micro pumping system (106) are configured to supply the positive liquid electrolyte and the negative liquid electrolyte, respectively, at a flow rate such that the positive liquid electrolyte and the negative liquid electrolyte are under a laminar flow regime inside the battery microcells (109), the positive liquid electrolyte and the negative liquid electrolyte being in direct contact inside the membraneless battery microcells (109) creating an interphase therebetween for transferring ion charge carriers between the liquid electrolytes, and
wherein the battery management system (104) is configured to cause the flow circulation system to supply the liquid electrolytes to the battery reactor (101) and simultaneously supply an electrical current through the electrodes (202,204) to electrically charge the redox microfluidic energy storage system (100) or to cause the flow circulation system to supply the liquid electrolytes to the battery reactor (101) such that an electrical current is released through the electrodes (202,204) to electrically discharge the redox microfluidic energy storage system (100).

2. The redox microfluidic energy storage system (100) according to claim 1, wherein the battery management system (104) is configured to adjust the electrolyte flow rates within the battery reactor (101) based on a current state of charge of the redox microfluidic energy storage system (100) and at least one of a value of a current circulating through the electrodes (202,204) and a power to be delivered by the redox microfluidic energy storage system (100) or to be received from an external source.

3. The redox microfluidic energy storage system (100) according to claim 1 or 2, wherein the battery management system (500) comprises:
a power management unit (503) configured to receive a request for the redox microfluidic energy storage system (100) to deliver a particular amount of power to a power consumption device or for the redox microfluidic energy storage system (100) to store energy at a particular amount of power, determine whether a stoichiometric flow rate setpoint at which the demanded amount of power can be delivered by the redox microfluidic energy storage system (100) or energy can be stored at the required amount of power in the redox microfluidic energy storage system (100) is feasible and calculate the stoichiometric flow rate setpoint;
an interphase management unit (504) configured to determine respective flow rates of the positive liquid electrolyte and the negative liquid electrolyte at the inlets (301,303) and outlets (302,304) of the battery reactor (101) based on the calculated stoichiometric flow rate setpoint; and
a fluidic management unit (505) configured to determine an operation mode for the flow circulation system such that the determined flow rates at the inlets (301,303) and outlets (302,304) of the battery reactor (101) are reached.

4. The redox microfluidic energy storage system (100) according to any one of the preceding claims, wherein the positive electrode half-microcell (201) and the negative electrode half-microcell (203) of each membraneless battery microcell (200) define a reaction microchannel (205) therebetween through which the positive liquid electrolyte and the negative liquid electrolyte flow in parallel in a laminar fashion.

5. The redox microfluidic energy storage system (100) according to any one of the preceding claims, comprising flow regulating means (405,410) arranged in microfluidic conduits of the flow circulation system between an outlet of the battery reactor (401) and the respective tank, the flow regulating means (405,410) being configured to regulate the fluid electrolyte flow rate exiting the battery reactor (401), preferably, by adjusting the passageway of the microfluidic conduit, based on a viscosity difference between both fluid electrolytes to balance the interphase therebetween inside the battery reactor (101).

6. The redox microfluidic energy storage system (100) according to claim 5, wherein the flow regulating means (405,410) comprises at least one of microvalves selected between piezoelectric microvalves and pneumatic microvalves and wherein the pneumatic microvalves are preferably actuated by pneumatic compressors.

7. The redox microfluidic energy storage system (100) according to any one of the preceding claims, wherein the flow rates at which the positive fluid electrolyte and the negative fluid electrolyte flow within the membraneless battery microcells (109) is selected from a range of 0 to 1000 µl per minute.

8. The redox microfluidic energy storage system (100) according to any one of the preceding claims, comprising a first inlet flow sensor (403) and a first outlet flow sensor (404) arranged in respective microfluidic conduits (415,419) of the first micro pumping system and a second inlet flow sensor (408) and a second outlet flow sensor (409) arranged in respective microfluidic conduits (418,422) of the second micro pumping system, wherein the first inlet flow sensor (403) and the second inlet flow sensor (408) are configured to measure the flow rate of the positive electrolyte and of the negative electrolyte, respectively, at the inlet of the battery reactor (401), and the first outlet flow sensor (404) and the second outlet flow sensor (409) are configured to measure the flow rate of the positive electrolyte and of the negative electrolyte, respectively, at the outlet of the battery reactor (401).

9. The redox microfluidic energy storage system (100) according to any one of the preceding claims, wherein the battery reactor (101) and the flow circulation system are integrated into a same main body (110).

10. A method (600) for charging the redox microfluidic energy storage system (100) according to any one of claims 1 to 9, **characterized in that** it comprises:
supplying (601), by the first micro pumping system (105), the positive liquid electrolyte to the positive electrode half-microcell (201) of the membraneless battery microcells (109);
simultaneously supplying (602), by the second micro pumping system (106), the negative liquid electrolyte to the negative electrode half-microcell (203) of the membraneless battery microcells (109);
applying (603) an electrical current through the positive electrodes (202) and the negative electrodes (204) of the membraneless battery microcells (109) while the positive liquid electrolyte and the negative liquid electrolyte are simultaneously flowing in a laminar regime through the positive electrode half-microcell (201) and the negative electrode half-microcell (203), respectively, such that redox reactions of active species in the electrolytes take place in the surfaces of the electrodes (202,204) and ion charge carriers are transferred between both electrolytes to compensate changes in the oxidation state of the active species within them, creating a difference in chemical potential between the positive and negative liquid electrolytes; and
storing the positive liquid electrolyte and the negative liquid electrolyte into the positive electrolyte tank (102) and the negative electrolyte tank (103), respectively.

11. The method (600) for charging the redox microfluidic energy storage system (100) according to claim 10, comprising:
receiving, at a power management unit (503) of the battery management system (500), a request for storing energy at a particular amount of power in the redox microfluidic energy storage system (100);
determining, by the power management unit (503), whether a stoichiometric flow rate setpoint at which energy can be stored at the required amount of power is feasible;
calculating, by the power management unit (503), the stoichiometric flow rate setpoint;
determining, by an interphase management unit (504) of the battery management system (500), flow rates for the positive liquid electrolyte and the negative liquid electrolyte at the inlets and outlets of the battery reactor (101) based on the calculated stoichiometric flow rate setpoint; and
determining, by a fluidic management unit (505) of the battery management system (500), an operation mode for the flow circulation system such that the determined flow rates at the inlets and outlets of the battery reactor (101) are reached.

12. The method (600) for charging the redox microfluidic energy storage system (100) according to claims 10 or 11, comprising:
monitoring, by the battery management system (500), the state of charge of the redox microfluidic energy storage system (100); and
carrying out the steps of claim 10 or 11 until a maximum energy capacity in the redox microfluidic energy storage system (100) has been reached and/or the power request for storing energy has finished.

13. A method (700) for discharging the redox microfluidic energy storage system (100) according to any one of claims 1 to 9, **characterized in that** it comprises:
supplying (701), by the first micro pumping system (105), the positive liquid electrolyte to the positive electrode half-microcell (201) of the membraneless battery microcells (109), existing a difference in chemical potential between the positive liquid electrolyte and the negative liquid electrolyte;
simultaneously supplying (702), by the second micro pumping system (106), the negative liquid electrolyte to the negative electrode half-microcell (203) of the membraneless battery microcells (109), such that redox reactions of active species in the electrolytes take place in the surfaces of electrodes (202,204) and ion charge carriers are transferred between both electrolytes to compensate changes in the oxidation state of the active species within them, releasing an electrical current that circulates through the electrodes (202,204) of the positive and negative electrode half-microcells (201,203); and
storing (703) the positive liquid electrolyte and the negative liquid electrolyte into the positive electrolyte tank (102) and the negative electrolyte tank (103), respectively.

14. The method (700) for discharging the redox microfluidic energy storage (100) system according to claim 13, comprising:
receiving, at a power management unit (503) of the battery management system (500), a request for delivering energy at a particular amount of power by the redox microfluidic energy storage system (100);
determining, by the power management unit (503), whether a stoichiometric flow rate setpoint at which the demanded amount of power can be delivered is feasible;
calculating, by the power management unit (503), the stoichiometric flow rate setpoint;
determining, by an interphase management unit (504) of the battery management system (500), flow rates for the positive liquid electrolyte and the negative liquid electrolyte at the inlets and outlets of the battery reactor (101) based on the calculated stoichiometric flow rate setpoint; and
determining, by a fluidic management unit (505) of the battery management system (500), an operation mode for the flow circulation system such that the determined flow rates at the inlets and outlets of the battery reactor (101) are reached.

15. The method (700) for discharging the redox microfluidic energy storage system (100) according to claims 13 or 14, comprising:
monitoring, by the battery management system (500), the state of charge of the redox microfluidic energy storage system (100); and
carrying out the steps of claim 13 or 14 until a minimum energy capacity in the redox microfluidic energy storage system (100) has been reached and/or the power request for delivering energy has finished.
